# EUROPEAN PATENT SPECIFICATION

(11) **EP 3 460 100 B1**
(45) Date of publication and mention of the grant of the patent: **10.11.2021**
(21) Application number: 16902497.3
(22) Date of filing: 23.05.2016
(51) Int. Cl.: C25B 15/02, C25B 13/04, C25B 1/04, C25B 9/19, C25B 9/70, C25B 9/73

(54) **ALKALINE WATER ELECTROLYSIS DEVICE AND OPERATION METHOD THEREOF**
ALKALISCHE WASSERELEKTROLYSEVORRICHTUNG UND BETRIEBSVERFAHREN DAFÜR
DISPOSITIF D'ÉLECTROLYSE D'EAU ALCALINE ET SON PROCÉDÉ DE FONCTIONNEMENT

(30) Priority: 18.05.2016 KR 20160060937
(43) Date of publication of application: 27.03.2019
(73) Proprietor: Doosan Corporation, Seoul 04563 (KR)
(72) Inventor: AHN, Chul-Soo, Seongnam-si Gyeonggi-do 13628 (KR); KANG, Taegon, Anseong-si Gyeonggi-do 17564 (KR)
(74) Representative: Krauns, Christian
(86) International application number: PCT/KR2016/005436
(87) International publication number: WO 2017/200130

(56) References cited:
- WO-A1-2016/037222
- JP-A- H08 144 079
- JP-A- 2006 518 812
- JP-A- 2010 162 544
- JP-A- 2013 199 697
- JP-A- 2013 231 213
- JP-A- 2013 231 213
- US-A1- 2007 151 865
- US-A1- 2008 302 651
- MILLET, P. et al.: "Electrochemical Characterization and Optimization of a PEM Water Electrolysis Stack for Hydrogen Generation", Chemical Engineering Transactions, vol. 41, 2014, pages 7-12, XP055558619,

## Description

### [Technical Field]

The present invention relates to an alkaline water electrolysis device and, more particularly, to an alkaline water electrolysis device for suppressing a degradation of a water electrolytic stack and a driving method thereof.

### [Background Art]

Hydrogen energy based on a water electrolysis device has high efficiency, has rich fuel (water), and does not emit pollutants such as a nitrogen oxide (NOx) or a sulfur oxide (SOx). Hydrogen may be produced by electrolyzing pure water or electrolyzing an aqueous alkaline solution.

An anion exchange membrane (AEM) is used in an alkaline water electrolysis method. In the AEM method, a unit cell includes an AEM, an anode electrode formed on one side of the AEM, and a cathode electrode formed on the other side of the AEM. A plurality of unit cells are stacked in series to constitute a water electrolytic stack, and the water electrolytic stack receives an aqueous alkaline solution (KOH or NaOH) from an electrolyte tank.

In the AEM method, hydroxide ions decomposed from the aqueous alkaline solution (NaOH or KOH) are catalytically reacted at the anode electrode to generate oxygen, water, and electrons, and the electrons move to the cathode electrode along an external conducting wire. At the cathode electrode, electrons and water are catalytically reacted to generate hydrogen and hydroxide ions.

If the alkaline water electrolysis device is arbitrarily stopped, voltage supply to the water electrolytic stack is stopped but a temperature of the water electrolytic stack is lowered as the aqueous alkaline solution continues to circulate inside the stack. In the no-load state, a residual voltage is present in the water electrolytic stack and accelerates deterioration of a catalysis of the anode and cathode electrodes and the AEM. This leads to deterioration of performance and lifespan of the alkaline water electrolysis device.

The US 2008/302651 A1 discloses a performance maintaining method for an electrolyzed functional water generating apparatus. A cation-exchange membrane provided in contact with an anode between a cathode and the anode regenerates a membrane by desorbing cations adsorbed to the cation-exchange membrane while to-be-electrolyzed raw water is subjected to electrolysis with a positive polarity in a state where an electrolytic chamber is supplied with to-be-electrolyzed raw water in the electrolyzed functional water generating apparatus having an electrolytic cell with a special structure that allows intake of the entire amount of water as cathode water.

The WO 2016/037222 A1 discloses an emissions reduction system to reduce levels of NOx and / or particulate matter from combustion engine emissions. The system comprises a feed water reservoir, an electrolytic cell capable of converting water into substantially pure hydrogen and oxygen and water vapour. A gas bubbler is provided to prevent build-up of hydrogen and to act as a flame arrestor from the combustion engine. The hydrogen produced by the electrolytic cell is fed via the gas bubbler into an internal combustion engine.

The JP 2013/231213 A discloses a water electrolysis system with a water electrolysis apparatus and a drying apparatus. The water electrolysis apparatus performs water electrolysis and sends hydrogen containing a water vapor and oxygen containing a water vapor. The drying apparatus removes the water vapors from the oxygen and the hydrogen. The drying apparatus is provided with a water electrolysis stack fed with the oxygen on the anode side and with the hydrogen on the cathode side, respectively and performs water hydrolysis, and an electric power source which applies a voltage to the water electrolysis stack to pass an electric current therethrough.

The JP H08-144079 A refers to the removal of a residual voltage from a water electrolytic cell. After the power supply to a water electrolytic cell is stopped, a pure water feed valve and flow control valves are kept open to continuously supply pure water on the anode side of the cells through water feed lines. Meanwhile, flow control valves are opened to continuously supply pure water on the cathode side of the cells through pure water feed lines. In this case, the waste water valves and of the waste water lines connected to gas-liquid separators are opened. Consequently, gaseous oxygen and hydrogen remaining on the anode and cathode sides of the cell are discharged outside the system from the cell respectively through the separators and the waste water valves.

The US 2007/151865 A1 discloses an electrolyzer apparatus and a method for hydrogen production. An electrolyzer cell for the electrolysis of water comprises a cathode of generally tubular configuration within which is disposed an anode separated from the cathode by a separation membrane of generally tubular configuration which divides the electrolyte chamber into an anode sub-chamber a and a cathode sub-chamber. An electrolyzer apparatus includes an array of individual cells across each of which an electric potential is imposed by a DC generator via electrical leads. Hydrogen gas generated within cells from electrolyte is removed via hydrogen gas take-off lines and hydrogen manifold line. By-product oxygen is removed from cells by oxygen gas take-off lines and oxygen manifold line. The electrolyzer apparatus is configured to operate either batchwise or in a continuous electrolyterecycle operation to produce high purity hydrogen at high pressure without the need for gas compressors to compress product hydrogen.

### [DISCLOSURE]

### [Technical Problem]

The present invention has been made in an effort to provide an alkaline water electrolysis device and a driving method thereof, having advantages of suppressing deterioration of an electrode catalyst and an anion exchange membrane (AEM) and enhancing durability of a water electrolytic stack by preventing the water electrolytic stack from being exposed to a no-load state when stopped.

### [Technical Solution]

The problem of the present invention is solved by an alkaline water electrolysis device according to the independent claim 1 and by a driving method of an alkaline water electrolysis device according to the independent claim 3. The dependent claims refer to further advantageous developments of the present invention. An exemplary embodiment of the present invention provides an alkaline water electrolysis device including a water electrolytic stack, a voltage application unit, a voltage removing unit, and a controller. The water electrolytic stack includes a plurality of membrane-electrode assemblies (MEAs) and electrolyzes an aqueous alkaline solution to generate hydrogen and oxygen. The voltage applying unit outputs a voltage required for electrolysis to the water electrolytic stack. When the water electrolytic stack is in a no-load state, the voltage removing unit is electrically connected with the water electrolytic stack to consume and remove a residual voltage of the water electrolytic stack. The controller controls operations of the water electrolytic stack, the voltage application unit, and the voltage removing unit.

The voltage removing unit includes a voltage consuming device and a switch turned on by the controller when the water electrolytic stack is a no-load state to electrically connect the voltage consuming device and the water electrolytic stack.

The water electrolytic stack is supplied with an aqueous alkaline solution from an electrolyte tank, and the voltage consuming device is an auxiliary heater installed in the electrolyte tank or alternatively the water electrolytic stack is supplied with an aqueous alkaline solution from the electrolyte tank through a pipe where a radiator is installed, and the voltage consuming device is a cooling fan installed at the radiator.

Each of the plurality of MEAs may include an anion exchange membrane (AEM).

Another embodiment of the present invention provides a driving method of an alkaline water electrolysis device including: a first operation in which a heater of an electrolyte tank is turned off simultaneously when a stop sequence starts, and an output voltage of a voltage application unit is lowered; a second operation in which a controller senses a voltage of a water electrolytic stack and compares the sensed voltage with a first reference voltage; a third operation in which when the sensed voltage is equal to or lower than the first reference voltage, the voltage application unit is turned off, a voltage consuming device is electrically connected with the water electrolytic stack to consume a residual voltage of the water electrolytic stack; a fourth operation in which the controller compares the sensed voltage with a second reference voltage; and a fifth operation in which when the sensed voltage is equal to or lower than the second reference voltage, an electrolyte circulation pump and the voltage consuming device are turned off.

The water electrolytic stack may include a unit cell including an anion exchange membrane (AEM). The first reference voltage may be higher than a theoretical electrolytic voltage of the unit cell, and the second reference voltage may be lower than the theoretical electrolytic voltage of the unit cell.

In the first to fourth operations, the water electrolytic stack is supplied with an aqueous alkaline solution from the electrolyte tank through a pipe where a radiator is installed. In the third operation, the voltage consuming device is configured as an auxiliary heater installed at the electrolyte tank or as a cooling fan installed at the radiator.

In the third operation, the controller may turn on a purge valve connected to the water electrolytic stack to lower an internal pressure of the water electrolytic stack, and turn on the cooling fan to cool the aqueous alkaline solution.

The fourth operation further may include an operation in which when the sensed voltage is equal to or lower than the second reference voltage, the purge valve is turned off and the controller senses a temperature of the water electrolytic stack and compares the sensed temperature with a set temperature. The fifth operation may be performed when the sensed temperature is equal to or lower than the set temperature, and the cooling fan may be turned off in the fifth operation.

### [Advantageous Effects]

According to an exemplary embodiment of the present invention as defined in claims 1 or 3, the alkaline water electrolysis device consumes and removes the residual voltage of the water electrolytic stack using the voltage removing unit. Thus, the water electrolytic stack is not exposed to a no-load state to prevent deterioration of catalysts of the anode and cathode electrodes and the AEM, resultantly enhancing lifespan and durability.

### [Description of the Drawings]

FIG. 1 is a view illustrating a configuration of a water electrolysis device according to an exemplary embodiment of the present invention.
FIG. 2 is a schematic cross-sectional view illustrating a single unit cell of a water electrolytic stack illustrated in FIG. 1.
FIG. 3 is a view illustrating a configuration of a first exemplary embodiment of a voltage consuming device illustrated in FIG. 1.
FIG. 4 is a view illustrating a configuration of a second exemplary embodiment of the voltage consuming device illustrated in FIG. 1.
FIG. 5 is a flow chart illustrating a driving method when an alkaline water electrolysis device is stopped.

### [Mode for Invention]

The present invention will be described more fully hereinafter with reference to the accompanying drawings, in which exemplary embodiments of the invention are shown. As those skilled in the art would realize, the described embodiments may be modified in various different ways within the limits of the independent claims 1 and 3.

Throughout the specification, unless explicitly described to the contrary, the word "comprise" and variations such as "comprises" or "comprising", will be understood to imply the inclusion of stated elements but not the exclusion of any other elements. In the drawings, sizes and thickness of components are arbitrarily shown for the description purposes, so the present invention is not limited to the illustrations of the drawings.

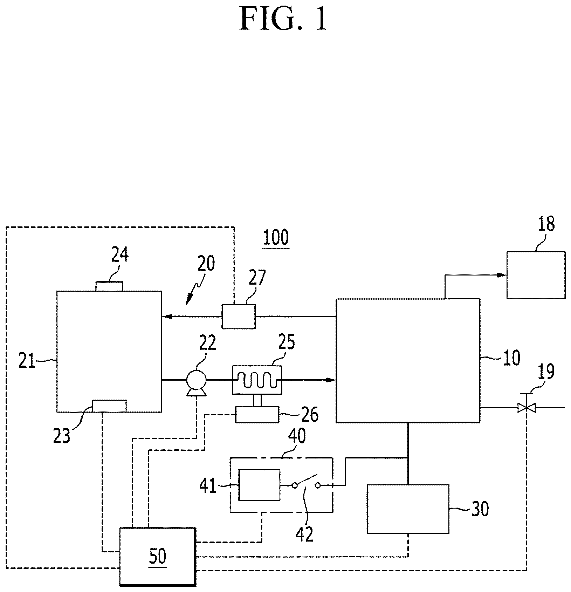

FIG. 1 is a view illustrating a configuration of a water electrolysis device Referring to FIG. 1, a water electrolysis device 100 includes a water electrolytic stack 10, an electrolyte supply unit 20, a voltage application unit 30, a voltage removing unit 40, and a controller 50. The water electrolytic stack 10 has a structure in which a plurality of unit cells are connected in series and stacked.

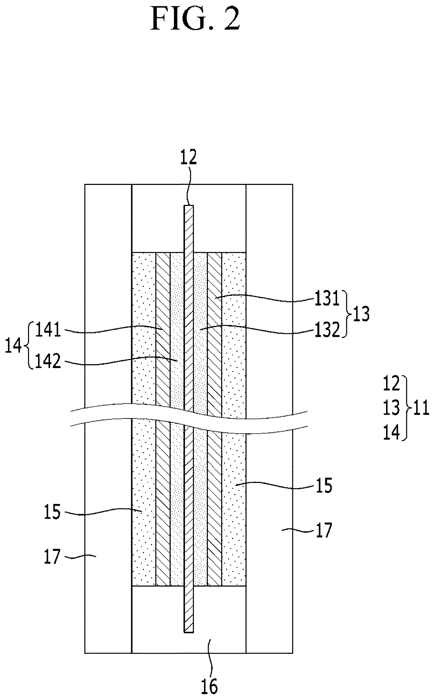

FIG. 2 is a schematic cross-sectional view illustrating a single unit cell of a water electrolytic stack illustrated in FIG. 1. Referring to FIG. 2, a unit cell of the water electrolytic stack 10 includes a membrane-electrode assembly (MEA) 11 and a pair of separators 17 disposed on both sides of the MEA 11.

The MEA 11 includes an anion exchange membrane (AEM) 12, an anode electrode 13 tightly attached to one side of the AEM 12, and a cathode electrode 14 tightly attached to the other side of the AEM 12. Each of the anode and cathode electrodes 13 and 14 includes electrode supports 131 and 141 formed as conductive porous bodies and catalyst layers 132 and 142 formed on one surfaces of the electrode supports 131 and 141 facing the AEM 12.

A gas diffusion layer 15 formed as a conductive porous body may be positioned outside the anode and cathode electrodes 13 and 14 and a gasket 16 for sealing may be fixed to the edge of the MEA 11.

The separator 17, which is a metal plate, connects two neighboring MEAs 11 in series and firmly supports the MEAs 11. One separator 17 may be positioned between two neighboring MEAs 11, which is referred to as a bipolar plate. A flow path (not shown) is formed at the separator 17 to supply an aqueous alkaline solution to the MEA 11.

Referring to FIGS. 1 and 2, the electrolyte supply unit 20 includes an electrolyte tank 21 storing an aqueous alkaline solution and a pump (electrolyte circulation pump) 22 supplying the aqueous alkaline solution from the electrolyte tank 21 to the water electrolytic stack 10. The electrolyte tank 21 includes a heater 23 for raising a temperature of the aqueous alkaline solution and a water level sensor 24 for detecting a water level of the aqueous alkaline solution.

A radiator 25 may be installed at a supply pipe of the aqueous alkaline solution provided with the pump 22. The radiator 25, which is an air-cooled heat exchanger, includes a cooling fan 26 for air circulation, and cools the aqueous alkaline solution supplied to the water electrolytic stack 10 when the cooling fan 26 operates.

The water electrolytic stack 10 consumes a partial amount of the supplied aqueous alkaline solution and discharges the remaining aqueous alkaline solution again to the electrolyte tank 21. That is, the aqueous alkaline solution circulates through the water electrolytic stack 10 and the electrolyte tank 21. A flow sensor 27 sensing a discharge flow rate of the aqueous alkaline solution may be installed at a discharge pipe of the aqueous alkaline solution.

The voltage application unit 30 is electrically connected to a power supplier (not shown) and the water electrolytic stack 10, and applies a voltage required for electrolysis of the aqueous alkaline solution to the water electrolytic stack 10. The power supplier is electrically connected to the pump 22, the heater 23, and the cooling fan 26 of the electrolyte supply unit 20 to supply electric power thereto. The power supplier may be separately provided for the water electrolytic stack 10 and for the electrolyte supply unit 20.

The water electrolytic stack 10 receives an aqueous alkaline solution maintained at a predetermined temperature by the heater 23 and receives a rated voltage from the voltage application unit 30 at the same time. A concentration of the aqueous alkaline solution may be 0.2M to 1M. An electric reaction of the water electrolytic stack 10 is as follows.
Anode electrode: 4OH⁻ → O₂ + 2H₂O + 2e⁻ (Eo = 0.4V)
Cathode electrode: 2H₂O + 2e⁻ → 2H₂ + 4OH⁻ (Eo = -0.83V)
Whole: 2H₂O → 2H₂ + O₂ (Eo = 1.23V)

Hydroxide ions decomposed from an aqueous alkaline solution (NaOH or KOH), which is an electrolyte, are catalytically reacted at the anode electrode 13 to generate oxygen, water, and electrons, and the electrons move to the cathode electrode 14 along an external conducting wire. At the cathode electrode 14, electrons and water are catalytically reacted to generate hydrogen and hydroxide ions.

Here, the aqueous alkaline solution may be supplied to both the anode electrode 13 and the cathode electrode 14 or may be supplied to only the anode electrode 13. In the latter case, dry hydrogen is generated at the cathode electrode 14.

Hydrogen generated at the water electrolytic stack 10 is collected to a hydrogen storage tank 18 and a purge valve 19 for adjusting an internal pressure of the water electrolytic stack 10 is connected to the water electrolytic stack 10. In addition, a temperature sensor (not shown) is installed in the water electrolytic stack 10 to sense an operating temperature of the water electrolytic stack 10.

In the above-described electric reaction, 1.23 V, which is a potential difference between the anode electrode 13 and the cathode electrode 14, is a theoretical electrolytic voltage, and a voltage applied to each unit cell in a normal operational state of the water electrolytic stack 10 is approximately 1.7V to 2.2V.

When the water electrolytic stack 10 normally operates, it is not important, but if the alkaline water electrolysis device 100 is stopped so the voltage application unit 30 is turned off, a residual voltage (or current) of the water electrolytic stack 10 affects long-term performance of the water electrolytic stack 10. That is, when the water electrolytic stack 10 is exposed to a no-load state, a residual voltage accelerates deterioration of the catalyst of the anode and the cathode electrodes 13 and 14 and the AEM 12.

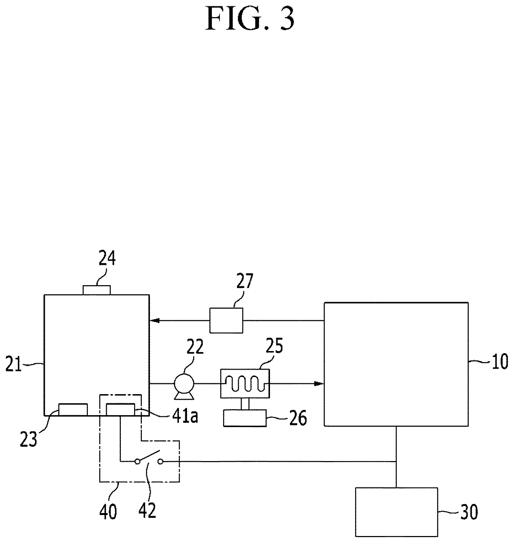

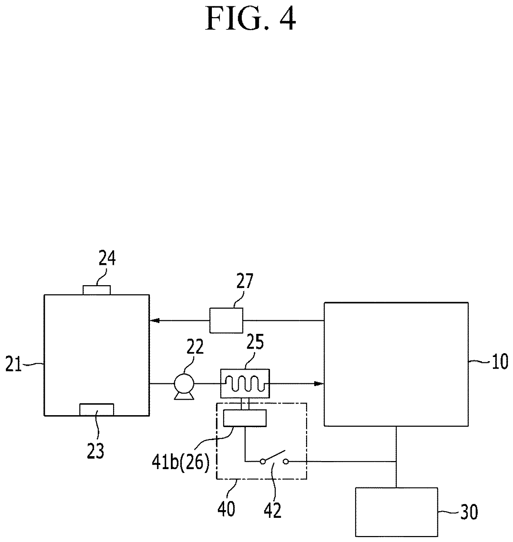

The voltage removing unit 40 includes a voltage consuming device 41 electrically connected with the water electrolytic stack 10 when the water electrolytic stack 10 is in a no-load state, to consume the residual voltage (or current) of the water electrolytic stack 10. Electrical connection of the voltage consuming device 41 with the water electrolytic stack 10 is controlled by an operation of a switch 42. The voltage consuming device 41 according to claims 1 and 3 is as defined in figures 3 or 4.

The controller 50 is electrically connected to the water electrolytic stack 10, the electrolyte supply unit 20, the voltage application unit 30, and the voltage removing unit 40 to sense operational states thereof and control operations thereof. Specifically, the controller 50 senses a voltage, a current, and a temperature of the water electrolytic stack 10, controls an operation of the voltage application unit 30, and controls ON/OFF of the purge valve 19 to regulate an internal voltage of the water electrolytic stack 10.

Further, the controller 50 regulates temperatures of an electrolyte and the water electrolytic stack 10 by controlling operations of the heater 23 and the cooling fan 26 of the electrolyte supply unit 20, and controls electrical connection between the voltage consuming device 41 and the water electrolytic stack 10 by operating the switch 42. In addition, the controller 50 may be connected to the flow sensor 27 to sense a discharge flow rate of the aqueous alkaline solution, and when a fault is sensed, the controller 50 may shut down the alkaline water electrolysis device 100.

In particular, the controller 50 senses a no-load state of the water electrolytic stack 10 when the alkaline water electrolysis device 100 stops operating, and turns on the switch 42 when the alkaline water electrolysis device 100 is in the no-load state so that the voltage consuming device 41 consumes and removes the residual voltage of the water electrolytic stack.

FIG. 3 is a view illustrating a configuration of a first exemplary embodiment of a voltage consuming device illustrated in FIG. 1.

Referring to FIG. 3, a voltage consuming device 41a is an auxiliary heater provided in the electrolyte tank 21. In this case, the auxiliary heater consumes all of the residual voltage of the water electrolytic stack 10 after about 30 seconds to one minute of operation (heat radiation), when electrically connected with the water electrolytic stack 10, and here, a discharge heat amount due to the auxiliary heater is not large.

FIG. 4 is a view illustrating a configuration of a second exemplary embodiment of the voltage consuming device illustrated in FIG. 1.

Referring to FIG. 4, a voltage consuming device 41b is a cooling fan 26 provided in the radiator 25 of the electrolyte supply unit 20. The cooling fan 26 is basically operated by electric power from the power supplier, and when the cooling fan 26 is electrically connected with the water electrolytic stack 10, connection of the cooling fan 26 to the power supplier is cut off. The cooling fan 26 is operated by the residual voltage of the water electrolytic stack 10 to consume the residual voltage, and after the residual voltage is completely consumed, the cooling fan 26 is connected to the power supplier again.

The alkaline water electrolysis device 100 of the present embodiment removes the residual voltage of the water electrolytic stack 10 using the voltage removing unit 40, and thus, the water electrolytic stack 10 is not exposed to a no-load state, preventing deterioration of catalysts of the anode and cathode electrodes 13 and 14 and the AEM 12, resultantly enhancing lifespan and durability.

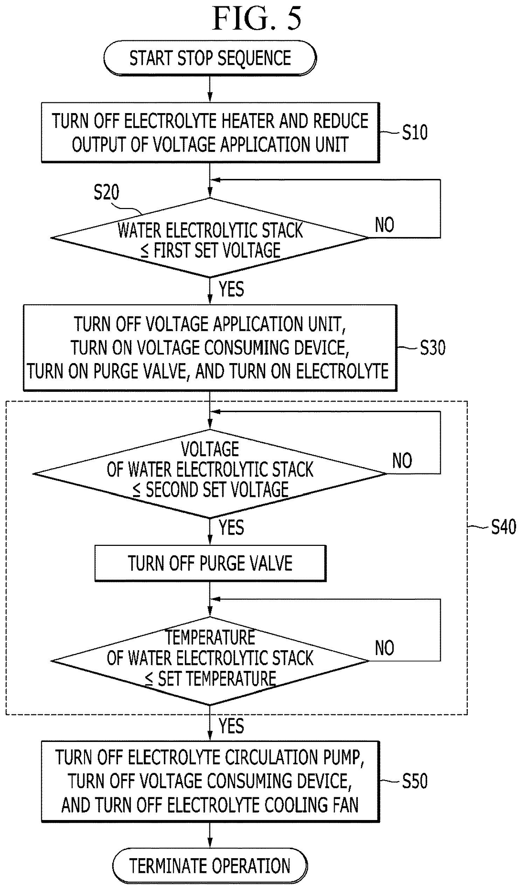

FIG. 5 is a flow chart illustrating a driving method when an alkaline water electrolysis device is stopped.

Referring to FIGS. 1 and 5, the driving method when the alkaline water electrolysis device is stopped includes first operation S10 in which a heater of the electrolyte tank is turned off simultaneously when a stop sequence starts, and an output voltage of the voltage application unit is lowered.

In first operation S10, an aqueous alkaline solution of the electrolyte tank 21 gradually decreases in temperature, and a temperature of the water electrolytic stack 10 also gradually decreases due to circulation of the aqueous alkaline solution. The voltage application unit 30 operates to gradually lower the output voltage applied to the water electrolytic stack 10.

After first operation S10, the controller 50 senses a voltage of the water electrolytic stack 10 and compares the sensed voltage with a first reference voltage in second operation S20. The first reference voltage, as a voltage at which a backward voltage is not applied to the water electrolytic stack 10, is a voltage slightly higher than a theoretical electrolytic voltage (1.23V) and may be set to 1.3V to 1.5V per unit cell, for example.

After second operation S20, if the sensed voltage is equal to or lower than the first reference voltage, the voltage application unit 30 is turned off and the voltage consuming device 41 is electrically connected with the water electrolytic stack 10 to consume a residual voltage of the water electrolytic stack 10 in third operation (S30).

In third operation S30, when the sensed voltage is equal to or lower than the first reference voltage, the controller 50 turns on the switch 42 to electrically connect the voltage consuming device 41 and the water electrolytic stack 10. The voltage consuming device 41 is operated by the residual voltage of the water electrolytic stack 10 to consume the residual voltage.

In third operation S30, the controller 50 turns on the purge valve 19 to lower an internal pressure of the water electrolytic stack 10 and turns on the cooling fan 26 of the radiator 25 to cool the aqueous alkaline solution. In case where the voltage consuming device 41 is configured as an auxiliary heater, a heat amount based on the auxiliary heater is smaller than a cooling heat amount based on the cooling fan 26, and thus, the aqueous alkaline solution is cooled by the cooling fan 26 in third operation S30.

After third operation S30, the controller 50 compares the sensed voltage with a second reference voltage in fourth operation S40. The second reference voltage, as a voltage lower than the theoretical electrolytic voltage (1.23V), may be set to, for example, 1V.

When the voltage consuming device 41 is configured as the cooling fan 26 of the radiator 25, the cooling fan 26 is operated by the residual voltage of the water electrolytic stack 10 in third operation S30, and thereafter, when the sensed voltage is equal to or lower than the second reference voltage in operation S40, the cooling fan 26 is connected again with a power supply unit and is operated upon receiving power from the power supply unit.

Fourth operation S40 may further include a process in which the purge valve 19 is turned off when the sensed voltage is equal to or lower than the second reference voltage and the controller senses a temperature of the water electrolytic stack 10 and compares the sensed temperature with a set temperature. In a normal operation, a temperature of the water electrolytic stack 10 is approximately 45 °C to 55 °C. The set temperature is lower than the temperature at the time of normal operation and may be set to a temperature within a range of approximately 20 °C to 30 °C.

In third operation S30, the aqueous alkaline solution is cooled, and the temperature of the water electrolytic stack 10 is lowered due to circulation of the aqueous alkaline solution. When the temperature of the water electrolytic stack 10 sensed by the controller 50 in fourth operation S40 is equal to or lower than the set temperature, the electrolyte circulation pump 22, the cooling fan 26, and the voltage consuming device 41 are turned off in fifth operation S50 and the operation of the alkaline water electrolysis device 100 is terminated.

According to the driving method at the time of stopping, the water electrolytic stack 10 is not exposed to the no-load state, and deterioration of the catalysts of the anode and cathode electrodes 13 and 14 and the AEM 12 is prevented, improving lifespan and durability of the alkaline water electrolysis device 100.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. An alkaline water electrolysis device (100) comprising:
a water electrolytic stack (10) including a plurality of membrane-electrode assemblies, MEAs, (11) and electrolyzing an aqueous alkaline solution to generate hydrogen and oxygen;
a voltage application unit (30) outputting a voltage required for electrolysis to the water electrolytic stack (10);
a voltage removing unit (40) electrically connected with the water electrolytic stack (10) when the water electrolytic stack (10) is in a no-load state, to consume and remove a residual voltage of the water electrolytic stack (10); and
a controller (50) controlling operations of the water electrolytic stack (10), the voltage application unit (30), and the voltage removing unit (40),
wherein the voltage removing unit (40) includes a voltage consuming device (41) and a switch (42) turned on by the controller (50) when the water electrolytic stack (10) is a no-load state to electrically connect the voltage consuming device (41) and the water electrolytic stack (10), **characterized in that**
the water electrolytic stack (10) is supplied with an aqueous alkaline solution from an electrolyte tank (21) through a pipe where a radiator (25) is installed, and that
the voltage consuming device (41) is configured as an auxiliary heater installed in the electrolyte tank (21) or as a cooling fan (26) installed at the radiator (25).

2. The alkaline water electrolysis device (100) of claim 1, wherein: each of the plurality of MEAs (11) includes an anion exchange membrane, AEM, (12).

3. A driving method of an alkaline water electrolysis device (100), the driving method comprising:
a first operation (S10) in which a heater (23) of an electrolyte tank (21) is turned off simultaneously when a stop sequence starts, and an output voltage of a voltage application unit (30) is lowered;
a second operation (S20) in which a controller (50) senses a voltage of a water electrolytic stack (10) and compares the sensed voltage with a first reference voltage;
a third operation (S30) in which when the sensed voltage is equal to or lower than the first reference voltage, the voltage application unit (30) is turned off, a voltage consuming device (41) is electrically connected with the water electrolytic stack (10) to consume a residual voltage of the water electrolytic stack (10);
a fourth operation (S40) in which the controller (50) compares the sensed voltage with a second reference voltage; and
a fifth operation (S50) in which when the sensed voltage is equal to or lower than the second reference voltage, an electrolyte circulation pump (22) and the voltage consuming device (41) are turned off, **characterized in that**
in the first to fourth operations (S10 to S40), the water electrolytic stack (10) is supplied with an aqueous alkaline solution from the electrolyte tank (21) through a pipe where a radiator (25) is installed, and that
in the third operation (S30), the voltage consuming device (41) is configured as an auxiliary heater installed at the electrolyte tank (21) or as a cooling fan (26) installed at the radiator (25).

4. The driving method of claim 3, wherein:
the water electrolytic stack (10) includes a unit cell including an anion exchange membrane, AEM, (12),
the first reference voltage is higher than a theoretical electrolytic voltage of the unit cell, and
the second reference voltage is lower than the theoretical electrolytic voltage of the unit cell.

5. The driving method of claim 3, wherein in the third operation (S30), the controller (50) turns on a purge valve (19) connected to the water electrolytic stack (10) to lower an internal pressure of the water electrolytic stack (10), and turns on the cooling fan (26) to cool the aqueous alkaline solution.

6. The driving method of claim 5, wherein the fourth operation (S40) further includes an operation in which when the sensed voltage is equal to or lower than the second reference voltage, the purge valve (19) is turned off and the controller (50) senses a temperature of the water electrolytic stack (10) and compares the sensed temperature with a set temperature.

7. The driving method of claim 6, wherein:
the fifth operation (S50) is performed when the sensed temperature is equal to or lower than the set temperature, and
the cooling fan (26) is turned off in the fifth operation.

## Patentansprüche

1. Elektrolysevorrichtung (100) für alkalisches Wasser, welche aufweist:
einen Wasserelektrolytstapel (10), der eine Vielzahl an Membran-ElektrodenAnordnungen, MEAs, (11) enthält und der eine wässrige alkalische Lösung elektrolysiert, um Wasserstoff und Sauerstoff zu erzeugen;
eine Spannungsanlegeeinheit (30), die eine für die Elektrolyse erforderliche Spannung an den Wasserelektrolysestapel (10) ausgibt;
eine Spannungsbeseitigungseinheit (40), die elektrisch mit dem Wasserelektrolytstapel (10) verbunden ist, wenn sich der Wasserelektrolytstapel (10) in einem unbelasteten Zustand befindet, um eine Restspannung des Wasserelektrolytstapels (10) zu verbrauchen und zu entfernen; und
eine Steuerung (50), die den Betrieb des Wasserelektrolytstapels (10), der Spannungsanlegeeinheit (30) und der Spannungsbeseitigungseinheit (40) steuert,
wobei die Spannungsbeseitigungseinheit (40) einen Spannungsverbraucher (41) und einen Schalter (42) aufweist, der von der Steuerung (50) eingeschaltet wird, wenn sich der Wasserelektrolytstapel (10) in einem Leerlaufzustand befindet, um den Spannungsverbraucher (41) und den Wasserelektrolytstapel (10) elektrisch anzuschließen, **dadurch gekennzeichnet, dass**
der Wasserelektrolytstapel (10) mit einer wässrigen alkalischen Lösung aus einem Elektrolyttank (21) durch ein Rohr versorgt wird, in dem ein Kühler (25) eingebaut ist, und dass
dass der Spannungsverbraucher (41) als ein in dem Elektrolyttank (21) eingebauter Zuheizer oder als ein an dem Kühler (25) eingebautes Kühlgebläse (26) ausgebildet ist.

2. Elektrolysevorrichtung (100) für alkalisches Wasser nach Anspruch 1, wobei jede von der Vielzahl der MEAs (11) eine Anionenaustauschermembran, AEM, (12) aufweist.

3. Antriebsverfahren einer alkalischen Wasserelektrolysevorrichtung (100), wobei das Antriebsverfahren umfasst:
einen ersten Arbeitsvorgang (S10), bei dem eine Heizung (23) eines Elektrolyttanks (21) gleichzeitig ausgeschaltet wird, wenn eine Stoppsequenz beginnt, und eine Ausgangsspannung einer Spannungsanlegeeinheit (30) gesenkt wird;
einen zweiten Arbeitsvorgang (S20), bei dem eine Steuerung (50) eine Spannung eines Wasserelektrolytstapels (10) erfasst und die erfasste Spannung mit einer ersten Referenzspannung vergleicht;
einen dritten Arbeitsvorgang (S30), bei dem, wenn die erfasste Spannung gleich oder niedriger als die erste Referenzspannung ist, die Spannungsanlegeeinheit (30) ausgeschaltet wird und ein Spannungsverbraucher (41) elektrisch mit dem Wasserelektrolytstapel (10) verbunden wird, um eine Restspannung des Wasserelektrolysestapels (10) zu verbrauchen;
einen vierten Arbeitsvorgang (S40), bei dem die Steuerung (50) die erfasste Spannung mit einer zweiten Referenzspannung vergleicht; und
einen fünften Arbeitsvorgang (S50), bei dem, wenn die erfasste Spannung gleich oder niedriger als die zweite Referenzspannung ist, eine Elektrolytumwälzpumpe (22) und der Spannungsverbraucher (41) abgeschaltet werden, **dadurch gekennzeichnet, dass**
bei dem ersten bis vierten Arbeitsvorgang (S10 bis S40) der Wasserelektrolytstapel (10) mit einer wässrigen alkalischen Lösung aus dem Elektrolyttank (21) durch ein Rohr versorgt wird, in dem ein Kühler (25) eingebaut ist, und dass
bei dem dritten Arbeitsvorgang (S30) der Spannungsverbraucher (41) als ein Zuheizer, der an dem Elektrolyttank (21) angebracht ist, oder als ein Kühlgebläse (26), das an dem Kühler (25) angebracht ist, ausgebildet ist.

4. Antriebsverfahren nach Anspruch 3, wobei
der Wasserelektrolysestapel (10) eine Elementarzelle enthält, die eine Anionenaustauschermembran, AEM, (12) enthält,
die erste Referenzspannung höher als eine theoretische elektrolytische Spannung der Elementarzelle ist, und
die zweite Referenzspannung niedriger als die theoretische elektrolytische Spannung der Elementarzelle ist.

5. Antriebsverfahren nach Anspruch 3, wobei in dem dritten Arbeitsvorgang (S30) die Steuerung (50) ein mit dem Wasserelektrolytstapel (10) verbundenes Spülventil (19) einschaltet, um einen Innendruck des Wasserelektrolysestapels zu senken (10), und sie das Kühlgebläse (26) einschaltet, um die wässrige alkalische Lösung zu kühlen.

6. Antriebsverfahren nach Anspruch 5, wobei der vierte Arbeitsvorgang (S40) ferner einen Arbeitsvorgang umfasst, bei dem, wenn die erfasste Spannung gleich oder niedriger als die zweite Referenzspannung ist, das Spülventil (19) ausgeschaltet wird und die Steuerung (50) eine Temperatur des Wasserelektrolytstapels (10) erfasst und die erfasste Temperatur mit einer eingestellten Temperatur vergleicht.

7. Antriebsverfahren nach Anspruch 6, wobei
der fünfte Arbeitsvorgang (S50) durchgeführt wird, wenn die erfasste Temperatur gleich oder niedriger als die eingestellte Temperatur ist, und
das Kühlgebläse (26) in dem fünften Arbeitsvorgang abgeschaltet wird.

## Revendications

1. Dispositif d'électrolyse d'eau alcaline (100) comprenant :
un empilement d'électrolyse d'eau (10) comportant une pluralité d'ensembles membrane-électrode, EME, (11) et l'électrolyse d'une solution alcaline aqueuse pour générer de l'hydrogène et de l'oxygène ;
une unité d'application de tension (30) délivrant en sortie une tension requise pour l'électrolyse à l'empilement d'électrolyse d'eau (10) ;
une unité de suppression de tension (40) connectée électriquement à l'empilement d'électrolyse d'eau (10) lorsque l'empilement d'électrolyse d'eau (10) est dans un état sans charge, pour consommer et supprimer une tension résiduelle de l'empilement d'électrolyse d'eau (10) ; et
un dispositif de commande (50) commandant des opérations de l'empilement d'électrolyse d'eau (10), de l'unité d'application de tension (30) et de l'unité de suppression de tension (40),
dans lequel l'unité de suppression de tension (40) comporte un dispositif de consommation de tension (41) et un commutateur (42) allumé par le dispositif de commande (50) lorsque l'empilement d'électrolyse d'eau (10) est un état sans charge pour connecter électriquement le dispositif de consommation de tension (41) et
l'empilement d'électrolyse d'eau (10), **caractérisé en ce que**
l'empilement d'électrolyse d'eau (10) est alimenté en une solution alcaline aqueuse provenant d'un réservoir d'électrolyte (21) à travers un tuyau où un radiateur (25) est installé, et **en ce que**
le dispositif de consommation de tension (41) est configuré comme un élément chauffant auxiliaire installé dans le réservoir d'électrolyte (21) ou comme un ventilateur de refroidissement (26) installé au niveau du radiateur (25).

2. Dispositif d'électrolyse d'eau alcaline (100) selon la revendication 1, dans lequel: chacun de la pluralité de EME (11) comporte une membrane échangeuse d'anions, MEA, (12).

3. Procédé de pilotage d'un dispositif d'électrolyse d'eau alcaline (100), le procédé de pilotage comprenant :
une première opération (S10) dans laquelle un élément chauffant (23) d'un réservoir d'électrolyte (21) est éteint simultanément lorsqu'une séquence d'arrêt démarre, et une tension de sortie d'une unité d'application de tension (30) est abaissée ;
une deuxième opération (S20) dans laquelle un dispositif de commande (50) détecte une tension d'un empilement d'électrolyse d'eau (10) et compare la tension détectée à une première tension de référence ;
une troisième opération (S30) dans laquelle lorsque la tension détectée est inférieure ou égale à la première tension de référence, l'unité d'application de tension (30) est éteinte, un dispositif de consommation de tension (41) est connecté électriquement à l'empilement d'électrolyse d'eau (10) pour consommer une tension résiduelle de l'empilement d'électrolyse d'eau (10) ;
une quatrième opération (S40) dans laquelle le dispositif de commande (50) compare la tension détectée à une deuxième tension de référence ; et
une cinquième opération (S50) dans laquelle lorsque la tension détectée est inférieure ou égale à la deuxième tension de référence, une pompe de circulation d'électrolyte (22) et le dispositif de consommation de tension (41) sont éteints, **caractérisé en ce que**
dans les première à quatrième opérations (S10 à S40), l'empilement d'électrolyse d'eau (10) est alimenté en une solution alcaline aqueuse provenant du réservoir d'électrolyte (21) à travers un tuyau où un radiateur (25) est installé, et **en ce que**
dans la troisième opération (S30), le dispositif de consommation de tension (41) est configuré comme un élément chauffant auxiliaire installé au niveau du réservoir d'électrolyte (21) ou comme un ventilateur de refroidissement (26) installé au niveau du radiateur (25).

4. Procédé de pilotage selon la revendication 3, dans lequel :
l'empilement d'électrolyse d'eau (10) comporte une cellule unitaire comportant une membrane échangeuse d'anions, MEA, (12),
la première tension de référence est supérieure à une tension électrolytique théorique de la cellule unitaire, et
la deuxième tension de référence est inférieure à la tension électrolytique théorique de la cellule unitaire.

5. Procédé de pilotage selon la revendication 3, dans lequel dans la troisième opération (S30), le dispositif de commande (50) allume un robinet de purge (19) connecté à l'empilement d'électrolyse d'eau (10) pour abaisser une pression interne de l'empilement d'électrolyse d'eau (10), et allume le ventilateur de refroidissement (26) pour refroidir la solution alcaline aqueuse.

6. Procédé de pilotage selon la revendication 5, dans lequel la quatrième opération (S40) comporte en outre une opération dans laquelle lorsque la tension détectée est inférieure ou égale à la deuxième tension de référence, le robinet de purge (19) est éteint et le dispositif de commande (50) détecte une température de l'empilement d'électrolyse d'eau (10) et compare la température détectée à une température définie.

7. Procédé de pilotage selon la revendication 6, dans lequel :
la cinquième opération (S50) est effectuée lorsque la température détectée est inférieure ou égale à la température définie, et
le ventilateur de refroidissement (26) est éteint dans la cinquième opération.
